# EUROPEAN PATENT APPLICATION

(11) **EP 3 128 409 A1**
(43) Date of publication of application: **08.02.2017**
(21) Application number: 15810483.6
(22) Date of filing: 26.05.2015
(51) Int. Cl.: G06F 3/0488

(54) **TOUCH POINT RECOGNITION METHOD AND DEVICE**

(30) Priority: 17.06.2014 CN 201410270199
(71) Applicant: Huawei Technologies Co. Ltd., Shenzhen, Guangdong 518129 (CN)
(72) Inventor: HAN, Bingtian, Shenzhen Guangdong 518129 (CN); GAO, Yun, Shenzhen Guangdong 518129 (CN)
(74) Representative: Pfenning, Meinig & Partner mbB
(86) International application number: PCT/CN2015/079815
(87) International publication number: WO 2015/192709

(57) **Abstract**

A touch point recognition method and apparatus pertain to the field of touchscreen technologies. The touch point recognition method includes: determining, by a touchscreen terminal, a touch point invalidation policy (S101); obtaining a touch event on a touchscreen (S102); determining a touch point of a touch gesture within a touchscreen edge area according to the touch event (S103); and recognizing an invalid touch point of the touch gesture within the touchscreen edge area according to the touch point of the touch gesture within the touchscreen edge area and the touch point invalidation policy (S104). Because an invalid touch point of the touch gesture within the touchscreen edge area can be recognized, the touchscreen terminal does not recognize all touch points on the touchscreen edge area as valid touch points, and a result of recognizing the touch gesture is not interfered, thereby improving accuracy of recognizing the touch gesture and operation efficiency on a touchscreen.

## Description

### TECHNICAL FIELD

The present invention pertains to the field of touchscreen technologies, and in particular, to a touch point recognition method and apparatus.

### BACKGROUND

By virtue of high operability, a novel user interface, and another advantage, currently, touchscreen terminals gradually replace conventional keyboard terminals, and become the mainstream in the market. More users operate terminals and enjoy convenience offered by a touchscreen. In addition, a touchscreen terminal can perform relevant operations on a terminal according to various touch gestures on a touchscreen. However, when a user holds the terminal, a finger of the user may touch a touchscreen edge area, and when the finger of the user touches the touchscreen edge area, the touchscreen terminal always detects a touch point of the finger of the user on the touchscreen edge area, and recognizes the touch point as a valid touch point. The touch point is generated when the finger touches the touchscreen edge area during holding. An unintentional touch often occurs during holding. Therefore, it is possible that the touch point is an invalid touch point. However, the existing touchscreen terminal recognizes all touch points on the touchscreen edge area as valid touch points, which interferes with a result of recognizing a touch gesture, and consequently, a recognized touch gesture is different from an actual touch gesture. Accuracy of recognizing the touch gesture and operation efficiency on the touchscreen are lowered.

### SUMMARY

A purpose of embodiments of the present invention is to provide a touch point recognition method, to resolve a problem that a touchscreen terminal recognizes all touch points on a touchscreen edge area as valid touch points, which interferes with a result of recognizing a touch gesture, and consequently, a recognized touch gesture is different from an actual touch gesture. Accuracy of recognizing the touch gesture and operation efficiency on a touchscreen are lowered.

According to a first aspect, an embodiment of the present invention provides a touch point recognition method, including:
determining, by a touchscreen terminal, a touch point invalidation policy;
obtaining a touch event on a touchscreen;
determining a touch point of a touch gesture within a touchscreen edge area according to the touch event; and
recognizing an invalid touch point of the touch gesture within the touchscreen edge area according to the touch point of the touch gesture within the touchscreen edge area and the touch point invalidation policy.

With reference to the first aspect, in a first possible implementation manner of the first aspect, the touch point invalidation policy includes at least one of the following policies:
a first policy: when a touch point of a touch gesture within the touchscreen edge area is the first touch point, and duration of the touch gesture is greater than or equal to a preset time threshold, the touch point of the touch gesture within the touchscreen edge area is recognized as an invalid touch point;
a second policy: when a touch point of a touch gesture within the touchscreen edge area moves, and a movement distance of the touch point on the touchscreen edge area is less than a preset distance threshold within a preset time threshold, the touch point of the touch gesture within the touchscreen edge area is recognized as an invalid touch point;
a third policy: when a touch point of a touch gesture within the touchscreen edge area moves, and a movement speed of the touch point on the touchscreen edge area is less than a preset speed threshold within a preset time threshold, the touch point of the touch gesture within the touchscreen edge area is recognized as an invalid touch point; or
a fourth policy: when a touch point of a touch gesture within the touchscreen edge area does not move, and duration in which the touch point does not move is greater than or equal to a preset time threshold, the touch point of the touch gesture within the touchscreen edge area is recognized as an invalid touch point.

With reference to the first aspect and the first possible implementation manner of the first aspect, in a second possible implementation manner of the first aspect, the recognizing an invalid touch point within the touchscreen edge area is specifically:
detecting whether the touch point of the touch gesture within the touchscreen edge area is the first touch point;
when it is detected that the touch point of the touch gesture within the touchscreen edge area is the first touch point, detecting whether duration of the touch gesture is greater than or equal to the preset time threshold; and
when the duration of the touch gesture is greater than or equal to the preset time threshold, recognizing the touch point of the touch gesture within the touchscreen edge area as an invalid touch point.

With reference to the first aspect and the first possible implementation manner of the first aspect, in a third possible implementation manner of the first aspect, the recognizing an invalid touch point within the touchscreen edge area is specifically:
detecting whether the touch point of the touch gesture within the touchscreen edge area moves;
when it is detected that the touch point of the touch gesture within the touchscreen edge area moves, detecting whether a movement distance of the touch point on the touchscreen edge area is less than the preset distance threshold within the preset time threshold; and
when it is detected that the movement distance of the touch point on the touchscreen edge area is less than the preset distance threshold within the preset time threshold, recognizing the touch point of the touch gesture within the touchscreen edge area as an invalid touch point.

With reference to the first aspect and the first possible implementation manner of the first aspect, in a fourth possible implementation manner of the first aspect, the recognizing an invalid touch point within the touchscreen edge area is specifically:
detecting whether the touch point of the touch gesture within the touchscreen edge area moves;
if it is detected that the touch point of the touch gesture within the touchscreen edge area moves, detecting whether a movement speed of the touch point on the touchscreen edge area is less than the preset speed threshold within the preset time threshold; and
if it is detected that the movement speed of the touch point on the touchscreen edge area is less than the preset speed threshold within the preset time threshold, recognizing the touch point of the touch gesture within the touchscreen edge area as an invalid touch point.

With reference to the first aspect and the first possible implementation manner of the first aspect, in a fifth possible implementation manner of the first aspect, the recognizing an invalid touch point within the touchscreen edge area is specifically:
detecting whether the touch point of the touch gesture within the touchscreen edge area moves;
when it is detected that the touch point of the touch gesture within the touchscreen edge area does not move, detecting whether duration in which the touch point does not move is greater than or equal to the preset time threshold; and
when it is detected that the duration in which the touch point does not move is greater than or equal to the preset time threshold, recognizing the touch point of the touch gesture within the touchscreen edge area as an invalid touch point.

With reference to the first aspect and the first possible implementation manner of the first aspect, in a sixth possible implementation manner of the first aspect, when the touchscreen terminal determines that the touch point invalidation policy is any combination of multiple policies among the first policy, the second policy, the third policy, and the fourth policy for determining a touch point as invalid by the touchscreen terminal, the recognizing an invalid touch point within the touchscreen edge area according to the touch point of the touch gesture within the touchscreen edge area and the touch point invalidation policy is specifically:
detecting whether the touch point of the touch gesture within the touchscreen edge area is the first touch point; and
when it is detected that the touch point of the touch gesture within the touchscreen edge area is the first touch point, detecting whether duration of the touch gesture is greater than or equal to the preset time threshold, and when the duration of the touch gesture is greater than or equal to the preset time threshold, recognizing the touch point of the touch gesture within the touchscreen edge area as an invalid touch point; or when it is detected that the touch point of the touch gesture within the touchscreen edge area is not the first touch point, detecting whether the touch point of the touch gesture within the touchscreen edge area moves;
when it is detected that the touch point of the touch gesture within the touchscreen edge area moves, detecting whether a movement distance on the touchscreen edge area is less than the preset distance threshold within the preset time threshold, or detecting whether a movement speed on the touchscreen edge area is less than the preset speed threshold within the preset time threshold; and
when it is detected that the movement distance on the touchscreen edge area is less than the preset distance threshold within the preset time threshold, or it is detected that the movement speed on the touchscreen edge area is less than the preset speed threshold within the preset time threshold, recognizing the touch point of the touch gesture within the touchscreen edge area as an invalid touch point; or
when it is detected that the touch point of the touch gesture within the touchscreen edge area does not move, detecting whether duration in which the touch point does not move is greater than or equal to the preset time threshold, and when it is detected that the duration in which the touch point does not move is greater than or equal to the preset time threshold, recognizing the touch point of the touch gesture within the touchscreen edge area as an invalid touch point.

According to a second aspect, an embodiment of the present invention provides a touch point recognition apparatus, including:
a first determining module, configured to determine a touch point invalidation policy;
an obtaining module, configured to obtain a touch event on a touchscreen; a second determining module, configured to determine a touch point of a touch gesture within a touchscreen edge area according to the touch event; and
a recognition module, configured to recognize an invalid touch point of the touch gesture within the touchscreen edge area according to the touch point of the touch gesture within the touchscreen edge area and the touch point invalidation policy.

With reference to the second aspect, in a first possible implementation manner of the second aspect, the touch point invalidation policy includes at least one of the following policies:
a first policy: when a touch point of a touch gesture within the touchscreen edge area is the first touch point, the touch point of the touch gesture within the touchscreen edge area is recognized as an invalid touch point;
a second policy: when a touch point of a touch gesture within the touchscreen edge area moves, and a movement distance of the touch point on the touchscreen edge area is less than a preset distance threshold within a preset time threshold, the touch point of the touch gesture within the touchscreen edge area is recognized as an invalid touch point;
a third policy: when a touch point of a touch gesture within the touchscreen edge area moves, and a movement speed of the touch point on the touchscreen edge area is less than a preset speed threshold within a preset time threshold, the touch point of the touch gesture within the touchscreen edge area is recognized as an invalid touch point; or
a fourth policy: when a touch point of a touch gesture within the touchscreen edge area does not move, and duration in which the touch point does not move is greater than or equal to a preset time threshold, the touch point of the touch gesture within the touchscreen edge area is recognized as an invalid touch point.

With reference to the second aspect and the first possible implementation manner of the second aspect, in a second possible implementation manner of the second aspect, the recognition module includes:
a first touch point detection unit, configured to detect whether the touch point of the touch gesture within the touchscreen edge area is the first touch point;
a first touch duration detection unit, configured to: when the first touch point detection unit determines that the touch point of the touch gesture within the touchscreen edge area is the first touch point, detect whether duration of the touch gesture is greater than or equal to the preset time threshold; and
a first invalidation recognition unit, configured to: when the first touch duration detection unit determines that the duration of the touch gesture is greater than or equal to the preset time threshold, recognize the touch point of the touch gesture within the touchscreen edge area as an invalid touch point.

With reference to the second aspect and the first possible implementation manner of the second aspect, in a third possible implementation manner of the second aspect, the recognition module includes:
a first touch point movement detection unit, configured to detect whether the touch point of the touch gesture within the touchscreen edge area moves;
a movement distance detection unit, configured to: when the first touch point movement detection unit detects that the touch point of the touch gesture within the touchscreen edge area moves, detect whether a movement distance of the touch point on the touchscreen edge area is less than the preset distance threshold within the preset time threshold; and
a second invalidation recognition unit, configured to: when the movement distance detection unit detects that the movement distance of the touch point on the touchscreen edge area is less than the preset distance threshold within the preset time threshold, recognize the touch point of the touch gesture within the touchscreen edge area as an invalid touch point.

With reference to the second aspect and the first possible implementation manner of the second aspect, in a fourth possible implementation manner of the second aspect, the recognition module includes:
a second touch point movement detection unit, configured to detect whether the touch point of the touch gesture within the touchscreen edge area moves;
a movement speed detection unit, configured to: when the second touch point movement detection unit detects that the touch point of the touch gesture within the touchscreen edge area moves, detect whether a movement speed of the touch point on the touchscreen edge area is less than the preset speed threshold within the preset time threshold; and
a third invalidation recognition unit, configured to: when the movement speed detection unit detects that the movement speed of the touch point on the touchscreen edge area is less than the preset speed threshold within the preset time threshold, recognize the touch point of the touch gesture within the touchscreen edge area as an invalid touch point.

With reference to the second aspect and the first possible implementation manner of the second aspect, in a fifth possible implementation manner of the second aspect, the recognition module includes: a third touch point movement detection unit, configured to detect whether the touch point of the touch gesture within the touchscreen edge area moves;
a first movement duration detection unit, configured to: when the third touch point movement detection unit detects that the touch point of the touch gesture within the touchscreen edge area does not move, detect whether duration in which the touch point does not move is greater than or equal to the preset time threshold; and
a fourth invalidation recognition unit, configured to: when the first movement duration detection unit detects that the duration in which the touch point does not move is greater than or equal to the preset time threshold, recognize the touch point of the touch gesture within the touchscreen edge area as an invalid touch point.

With reference to the second aspect and the first possible implementation manner of the second aspect, in a sixth possible implementation manner of the second aspect, the recognition module includes:
a second touch point detection unit, configured to detect whether the touch point of the touch gesture within the touchscreen edge area is the first touch point;
a second touch duration detection unit, configured to: when the second touch point detection unit detects that the touch point of the touch gesture within the touchscreen edge area is the first touch point, detect whether duration of the touch gesture is greater than or equal to the preset time threshold;
a fifth invalidation recognition unit, configured to: when the second touch duration detection unit detects that the duration of the touch gesture is greater than or equal to the preset time threshold, recognize the touch point of the touch gesture within the touchscreen edge area as an invalid touch point;
a fourth touch point movement detection unit, configured to: when the second touch point detection unit detects that the touch point of the touch gesture within the touchscreen edge area is not the first touch point, detect whether the touch point of the touch gesture within the touchscreen edge area moves;
a distance and speed detection unit, configured to: when the fourth touch point movement detection unit detects that the touch point of the touch gesture within the touchscreen edge area moves, detect whether a movement distance on the touchscreen edge area is less than the preset distance threshold within the preset time threshold, or detect whether a movement speed on the touchscreen edge area is less than the preset speed threshold within the preset time threshold;
a sixth invalidation recognition unit, configured to: when the distance and speed detection unit detects that the movement distance on the touchscreen edge area is less than the preset distance threshold within the preset time threshold, or detects that the movement speed on the touchscreen edge area is less than the preset speed threshold within the preset time threshold, recognize the touch point of the touch gesture within the touchscreen edge area as an invalid touch point;
a second movement duration detection unit, configured to: when the fourth touch point movement detection unit detects that the touch point of the touch gesture within the touchscreen edge area does not move, detect whether duration in which the touch point does not move is greater than or equal to the preset time threshold; and
a seventh invalidation recognition unit, configured to: when the second movement duration detection unit detects that the duration in which the touch point does not move is greater than or equal to the preset time threshold, recognize the touch point of the touch gesture within the touchscreen edge area as an invalid touch point.

In the embodiments, a touchscreen terminal can recognize an invalid touch point of a touch gesture within a touchscreen edge area. Therefore, the touchscreen terminal does not recognize all touch points on the touchscreen edge area as valid touch points, and a result of recognizing the touch gesture is not interfered, thereby improving accuracy of recognizing the touch gesture and operation efficiency on a touchscreen.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is an implementation flowchart of a touch point recognition method according to an embodiment of the present invention;
FIG. 2 is an exemplary sample figure of performing a slide operation according to an embodiment of the present invention;
FIG. 3 is an exemplary sample figure of performing a pinch gesture operation according to an embodiment of the present invention;
FIG. 4 is a structural block diagram of a touch point recognition apparatus according to an embodiment of the present invention;
FIG. 5 is a structural block diagram of a recognition module according to an embodiment of the present invention;
FIG. 6 is a structural block diagram of a recognition module according to an embodiment of the present invention;
FIG. 7 is a structural block diagram of a recognition module according to an embodiment of the present invention;
FIG. 8 is a structural block diagram of a recognition module according to an embodiment of the present invention;
FIG. 9 is a structural block diagram of a recognition module according to an embodiment of the present invention; and
FIG. 10 is a schematic structural diagram of a touchscreen terminal according to an embodiment of the present invention.

### DESCRIPTION OF EMBODIMENTS

To make the objectives, technical solutions, and advantages of the present invention clearer and more comprehensible, the following further describes the present invention in detail with reference to the accompanying drawings and embodiments. It should be understood that the specific embodiments described herein are merely used to explain the present invention but are not intended to limit the present invention.

### Embodiment 1

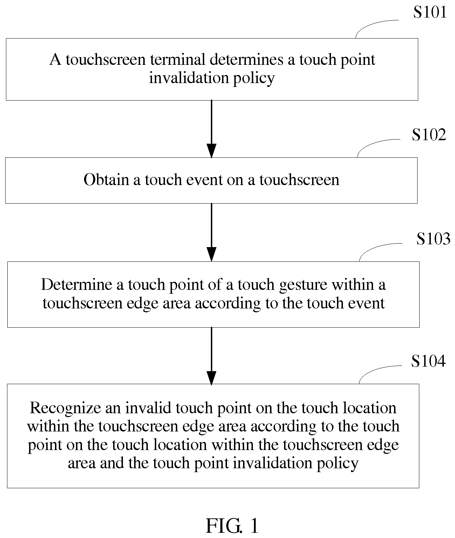

Referring to FIG. 1, FIG. 1 is an implementation flowchart of a touch point recognition method according to this embodiment of the present invention.

In step S101, a touchscreen terminal determines a touch point invalidation policy. The touch point invalidation policy includes at least one of the following policies:
a first policy: when a touch point of a touch gesture within a touchscreen edge area is the first touch point, and duration of the touch gesture is greater than or equal to a preset time threshold, the touch point of the touch gesture within the touchscreen edge area is recognized as an invalid touch point;
a second policy: when a touch point of a touch gesture within a touchscreen edge area moves, and a movement distance of the touch point on the touchscreen edge area is less than a preset distance threshold within a preset time threshold, the touch point of the touch gesture within the touchscreen edge area is recognized as an invalid touch point;
a third policy: when a touch point of a touch gesture within a touchscreen edge area moves, and a movement speed of the touch point on the touchscreen edge area is less than a preset speed threshold within a preset time threshold, the touch point of the touch gesture within the touchscreen edge area is recognized as an invalid touch point; or
a fourth policy: when a touch point of a touch gesture within a touchscreen edge area does not move, and duration in which the touch point does not move is greater than or equal to a preset time threshold, the touch point of the touch gesture within the touchscreen edge area is recognized as an invalid touch point.

That a touchscreen terminal determines a touch point invalidation policy may be specifically:
the touchscreen terminal determines any policy among the first policy, the second policy, the third policy, and the fourth policy of the touch point invalidation policy; or
the touchscreen terminal determines any combination of multiple policies among the first policy, the second policy, the third policy, and the fourth policy of the touch point invalidation policy.

It should be noted that an execution sequence for step S101 and step S102 is not limited in this embodiment of the present invention. Specifically, step S101 may be executed before step S102; or step S102 may be executed before step S101; or step S101 and step S102 may be executed at the same time.

In step S102, obtain a touch event on a touchscreen.

The touch event may be an event triggered when a touch gesture operates on the touchscreen. A process of obtaining the touch event on the touchscreen by the touchscreen terminal is as follows: by using a preset data transmission interface, receiving in real-time, the touch event passed by the touchscreen, where the touch event includes a touch press event, a touch leave event, and a touch movement event. In step S103, determine a touch point of a touch gesture within a touchscreen edge area according to the touch event.

The touchscreen edge area is a closed area formed between a curve that is a preset pixel width away from a touchscreen edge and a touchscreen frame, and the touchscreen edge area may be set by default in a system, or may be set by a user, which is not limited herein.

The touch press event includes touch gesture coordinates of the touch point. Whether the touch gesture coordinates are within a coordinates range of the touchscreen edge area is detected, and if the touch gesture coordinates are within the coordinates range of the touchscreen edge area, it indicates that the touch gesture of the touch point is within the touchscreen edge area, that is, it can be determined that the touch point is a touch point of the touch gesture within the touchscreen edge area.

In step S104, recognize an invalid touch point of the touch gesture within the touchscreen edge area according to the touch point of the touch gesture within the touchscreen edge area and the touch point invalidation policy.

An implementation process of recognizing an invalid touch point of the touch gesture within the touchscreen edge area by the touchscreen terminal is described in Embodiment 2 and Embodiment 3, and is not described herein.

In this embodiment, a touchscreen terminal can recognize an invalid touch point of a touch gesture within a touchscreen edge area. Therefore, the touchscreen terminal does not recognize all touch points on the touchscreen edge area as valid touch points, and a result of recognizing the touch gesture is not interfered, thereby improving accuracy of recognizing the touch gesture and operation efficiency on a touchscreen.

### Embodiment 2

This embodiment mainly describes an implementation process of recognizing an invalid touch point within a touchscreen edge area according to a touch point of a touch gesture within the touchscreen edge area and a touch point invalidation policy when a touchscreen terminal determines that the touch point invalidation policy is specifically any policy among a first policy, a second policy, a third policy, and a fourth policy for determining a touch point as invalid by the touchscreen terminal, and details are described as follows:
In an implementation manner of this embodiment of the present invention,
   when the touch point invalidation policy is the first policy, the recognizing an invalid touch point within a touchscreen edge area according to a touch point of a touch gesture within the touchscreen edge area and a touch point invalidation policy is specifically:
   detecting whether the touch point of the touch gesture within the touchscreen edge area is the first touch point;
   when it is detected that the touch point of the touch gesture within the touchscreen edge area is the first touch point, detecting whether duration of the touch gesture is greater than or equal to a preset time threshold; and when the duration of the touch gesture is greater than or equal to the preset time threshold, recognizing the touch point of the touch gesture within the touchscreen edge area as an invalid touch point.

When the touch gesture has only one touch point within the touchscreen edge area, the touchscreen terminal can detect that the touch point within the touchscreen edge area is the first touch point, and recognizes the first touch point as an invalid touch point.

When the touch gesture has multiple touch points within the touchscreen edge area, the touchscreen terminal can detect whether there is the first touch point among the multiple touch points. If there is the first touch point among the multiple touch points, the first touch point is recognized as an invalid touch point.

A detection process of detecting whether the touch point of the touch gesture within the touchscreen edge area is the first touch point is as follows:

After the touch point of the touch gesture within the touchscreen edge area is determined according to a touch event, whether a touch press event passed by a touchscreen is received is always being detected until the preset time threshold is reached; and
during this period of time, if no touch press event passed by the touchscreen is received, it indicates that the touch point of the touch gesture within the touchscreen edge area is the first touch point.

An application scenario of the first policy is applicable to a single-touch operation manner.

The single-touch operation manner is an operation manner responding to one touch point.

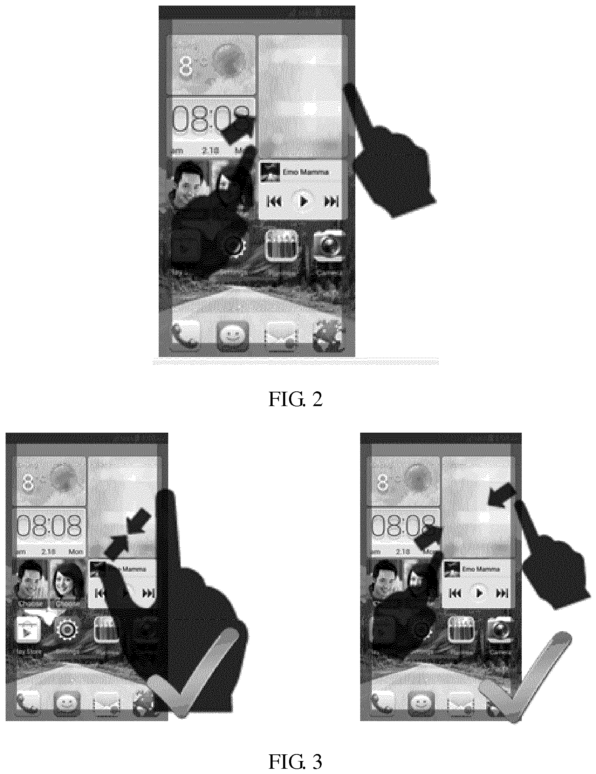

Referring to FIG. 2, FIG. 2 is an exemplary sample figure of performing a slide operation according to this embodiment of the present invention, and details are described as follows:
A user takes out a terminal, and holds the terminal by using a palm and four fingers except the thumb. The four fingers except the thumb first touch a touchscreen edge area, and in this case, the user then performs a slide operation by using the thumb.

In the prior art, an operation manner of a slide operation is a single-touch operation manner, and a touchscreen terminal has detected a touch point of a finger of a user on a touchscreen edge area and recognizes the touch point as a valid touch point.

Therefore, the touchscreen terminal blocks a slide operation of a thumb, and does not perform the slide operation.

However, in this implementation manner, it is detected that a touch point of a touch gesture within the touchscreen edge area is the first touch point, and the touch point of the touch gesture within the touchscreen edge area is recognized as an invalid touch point. Therefore, the touchscreen terminal does not block the slide operation of the thumb, and performs the slide operation.

In an implementation manner of this embodiment of the present invention,
when the touch point invalidation policy is the second policy, the recognizing an invalid touch point within a touchscreen edge area according to a touch point of a touch gesture within the touchscreen edge area and a touch point invalidation policy is specifically:
detecting whether the touch point of the touch gesture within the touchscreen edge area moves;
when it is detected that the touch point of the touch gesture within the touchscreen edge area moves, detecting whether a movement distance of the touch point on the touchscreen edge area is less than a preset distance threshold within a preset time threshold; and
when it is detected that the movement distance of the touch point on the touchscreen edge area is less than the preset distance threshold within the preset time threshold, recognizing the touch point of the touch gesture within the touchscreen edge area as an invalid touch point.

A detection process of detecting whether the touch point of the touch gesture within the touchscreen edge area moves is as follows:
After the touch point of the touch gesture within the touchscreen edge area is determined according to a touch event, whether a touch movement event passed by the touchscreen is received is always being detected until the preset time threshold is reached; and
during this period of time, if a touch movement event passed by the touchscreen is received, it indicates that the touch point of the touch gesture within the touchscreen edge area moves.

A detection process of detecting whether the movement distance on the touchscreen edge area is less than the preset distance threshold is:
obtaining initial touch gesture coordinates by using a touch press event, obtaining movement touch gesture coordinates from the touch movement event, and generating the movement distance according to the initial touch gesture coordinates and the movement touch gesture coordinates;
comparing the generated movement distance with the preset distance threshold, so as to detect whether the movement distance on the touchscreen edge area is less than the preset distance threshold; and
if it is detected that the movement distance is less than the preset distance threshold, and duration in which the movement distance is less than the preset distance threshold is greater than or equal to the preset time threshold, recognizing the touch point of the touch gesture within the touchscreen edge area as an invalid touch point.

An application scenario of the second policy is applicable to a multi-touch operation manner, the multi-touch operation manner is an operation manner responding to multiple touch points, and details are described as follows:
A user takes out a terminal, and holds the terminal by using a palm and four fingers except the thumb. The four fingers except the thumb first touch a touchscreen edge area, and in this case, the user then performs a zooming operation by using another finger.

In the prior art, a present operation manner is a multi-touch operation manner, and a touchscreen terminal has detected a touch point of a finger of a user on a touchscreen edge area and recognizes the touch point as a valid touch point. Therefore, the touchscreen terminal recognizes a touch gesture with reference to the touch point on the touchscreen edge area. If no processing is performed, when there are at least two touch points on the touchscreen edge area, the touchscreen terminal cannot recognize a two-finger touch gesture, and in addition, when there are at least three touch points on the touchscreen edge area, the touchscreen terminal cannot recognize a three-finger touch gesture.

However, in this implementation manner, because it is detected that a movement distance of a touch point of a touch gesture within the touchscreen edge area is less than a preset distance threshold, the touch point of the touch gesture within the touchscreen edge area is recognized as an invalid touch point, so that the touchscreen terminal can recognize a two-finger touch gesture, a three-finger touch gesture, and another multiple-finger touch gesture, and performs a corresponding touch operation. In an implementation manner of this embodiment of the present invention,
when the touch point invalidation policy is the third policy, the recognizing an invalid touch point within a touchscreen edge area according to a touch point of a touch gesture within the touchscreen edge area and a touch point invalidation policy is specifically:
detecting whether the touch point of the touch gesture within the touchscreen edge area moves;
if it is detected that the touch point of the touch gesture within the touchscreen edge area moves, detecting whether a movement speed of the touch point on the touchscreen edge area is less than a preset speed threshold within a preset time threshold; and
if it is detected that the movement speed of the touch point on the touchscreen edge area is less than the preset speed threshold within the preset time threshold, recognizing the touch point of the touch gesture within the touchscreen edge area as an invalid touch point.

An application scenario of the third policy is applicable to a multi-touch operation manner, and for ease of description, details are described as follows:
A user takes out a terminal, and holds the terminal by using a palm and four fingers except the thumb. The four fingers except the thumb first touch a touchscreen edge area, and in this case, the user then performs a zooming operation by using another finger.

In the prior art, a present operation manner is a multi-touch operation manner, and a touchscreen terminal has detected a touch point of a finger of a user on a touchscreen edge area and recognizes the touch point as a valid touch point. Therefore, the touchscreen terminal recognizes a touch gesture with reference to the touch point on the touchscreen edge area. If no processing is performed, when there are at least two touch points on the touchscreen edge area, the touchscreen terminal cannot recognize a two-finger touch gesture, and in addition, when there are at least three touch points on the touchscreen edge area, the touchscreen terminal cannot recognize a three-finger touch gesture.

However, in this implementation manner, because it is detected that a movement speed of a touch point of a touch gesture within the touchscreen edge area is less than a preset speed threshold, the touch point of the touch gesture within the touchscreen edge area is recognized as an invalid touch point, so that the touchscreen terminal can recognize a two-finger touch gesture, a three-finger touch gesture, and another multiple-finger touch gesture, and performs a corresponding touch operation.

Referring to FIG. 3, FIG. 3 is an exemplary sample figure of performing a pinch gesture operation according to this embodiment.

The pinch gesture is generated by pinching two fingers, and a finger that is of the two fingers and touches the touchscreen edge area is referred to as a first finger in the following, and the other finger of the two fingers is referred to as a second finger in the following.

When the two fingers perform a pinch gesture, the first finger starts moving from the touchscreen edge area, and a stay time of the first finger on the touchscreen edge area does not reach specified duration. Based on the third policy in the foregoing, the touchscreen terminal detects that the movement speed of the touch point of the touch gesture within the touchscreen edge area is greater than the preset speed threshold.

Therefore, the touch point of the touch gesture within the touchscreen edge area is recognized as a valid touch point. In this case, with reference to a touch point generated by the second finger, the pinch gesture is recognized, and the pinch gesture functions.

In an implementation manner of this embodiment of the present invention,
when the touch point invalidation policy is the fourth policy, the recognizing an invalid touch point within a touchscreen edge area according to a touch point of a touch gesture within the touchscreen edge area and a touch point invalidation policy is specifically:
detecting whether the touch point of the touch gesture within the touchscreen edge area moves;
when it is detected that the touch point of the touch gesture within the touchscreen edge area does not move, detecting whether duration in which the touch point does not move is greater than or equal to a preset time threshold; and
when it is detected that the duration in which the touch point does not move is greater than or equal to the preset time threshold, recognizing the touch point of the touch gesture within the touchscreen edge area as an invalid touch point.

An application scenario of the fourth policy is applicable to a single-touch operation manner. For ease of description, performing an operation of tapping an icon is used as an example, and details are described as follows:
A user takes out a terminal, and holds the terminal by using a palm and four fingers except the thumb. The four fingers except the thumb first touch a touchscreen edge area, and in this case, the user then taps an icon by using another finger.

In the prior art, an operation manner of tapping an icon is a single-touch operation manner, and a touchscreen terminal has detected a touch point of a finger of a user on a touchscreen edge area and recognizes the touch point as a valid touch point.

Therefore, the touchscreen blocks a tapping operation of another finger, and consequently, the touchscreen terminal cannot perform the operation of tapping an icon.

In this implementation manner, because it is detected that duration in which a touch point of a touch gesture within the touchscreen edge area does not move is greater than or equal to a preset time threshold, the touch point of the touch gesture within the touchscreen edge area is recognized as an invalid touch point. Therefore, the touchscreen terminal does not block a tap of another finger, so that the touchscreen terminal can perform the operation of tapping an icon.

### Embodiment 3

This embodiment mainly describes an implementation process of recognizing an invalid touch point within a touchscreen edge area according to a touch point of a touch gesture within the touchscreen edge area and a touch point invalidation policy when a touchscreen terminal determines that the touch point invalidation policy is any combination of multiple policies among a first policy, a second policy, a third policy, and a fourth policy for determining a touch point as invalid by the touchscreen terminal, and the implementation process is specifically:
detecting whether the touch point of the touch gesture within the touchscreen edge area is the first touch point; and
when it is detected that the touch point of the touch gesture within the touchscreen edge area is the first touch point, detecting whether duration of the touch gesture is greater than or equal to a preset time threshold, and when the duration of the touch gesture is greater than or equal to the preset time threshold, recognizing the touch point of the touch gesture within the touchscreen edge area as an invalid touch point; or when it is detected that the touch point of the touch gesture within the touchscreen edge area is not the first touch point, detecting whether the touch point of the touch gesture within the touchscreen edge area moves;
when it is detected that the touch point of the touch gesture within the touchscreen edge area moves, detecting whether a movement distance on the touchscreen edge area is less than a preset distance threshold within the preset time threshold, or detecting whether a movement speed on the touchscreen edge area is less than a preset speed threshold within the preset time threshold; and
when it is detected that the movement distance on the touchscreen edge area is less than the preset distance threshold within the preset time threshold, or it is detected that the movement speed on the touchscreen edge area is less than the preset speed threshold within the preset time threshold, recognizing the touch point of the touch gesture within the touchscreen edge area as an invalid touch point; or when it is detected that the touch point of the touch gesture within the touchscreen edge area does not move, detecting whether duration in which the touch point does not move is greater than or equal to the preset time threshold, and when it is detected that the duration in which the touch point does not move is greater than or equal to the preset time threshold, recognizing the touch point of the touch gesture within the touchscreen edge area as an invalid touch point.

When the touch gesture has only one touch point within the touchscreen edge area, the touchscreen terminal can detect that the touch point within the touchscreen edge area is the first touch point, and recognizes the first touch point as an invalid touch point.

When the touch gesture has multiple touch points within the touchscreen edge area, the touchscreen terminal can detect whether there is the first touch point among the multiple touch points.

If there is the first touch point among the multiple touch points, the first touch point is recognized as an invalid touch point, and it is separately detected whether a touch point except the first touch point among the multiple touch points moves. If the touch point except the first touch point among the multiple touch points moves, it is separately detected whether a movement distance that is of the movement touch point except the first touch point among the multiple touch points and that is on the touchscreen edge area is less than the preset distance threshold within the preset time threshold, or it is detected whether a movement speed on the touchscreen edge area is less than the preset speed threshold within the preset time threshold, and when the movement distance is less than the preset distance threshold or the movement speed is less than the preset speed threshold, the movement touch point except the first touch point among the multiple touch points is recognized as an invalid touch point. If the touch point except the first touch point among the multiple touch points does not move, it is separately detected whether duration in which the touch point except the first touch point among the multiple touch points does not move is greater than or equal to the preset time threshold, and when it is detected that the duration in which the touch point except the first touch point among the multiple touch points does not move is greater than or equal to the preset time threshold, the touch point, except the first touch point among the multiple touch points, of the touch gesture within the touchscreen edge area is recognized as an invalid touch point.

If there is no first touch point among the multiple touch points, it is separately detected whether the multiple touch points move. If a touch point of the multiple touch points moves, it is separately detected whether a movement distance that is of the movement touch point among the multiple touch points and that is on the touchscreen edge area is less than the preset distance threshold within the preset time threshold, or it is detected whether a movement speed on the touchscreen edge area is less than the preset speed threshold within the preset time threshold, and when the movement distance is less than the preset distance threshold or the movement speed is less than the preset speed threshold, the movement touch point among the multiple touch points is recognized as an invalid touch point. If a touch point of the multiple touch points does not move, it is separately detected whether duration in which a non-movement touch point does not move is greater than or equal to the preset time threshold, and when it is detected that the duration in which the non-movement touch point does not move is greater than or equal to the preset time threshold, the touch point of the touch gesture within the touchscreen edge area is recognized as an invalid touch point.

In this embodiment, multiple policies are combined, and the technical solution is applicable to a single-touch operation manner and a multi-touch operation manner. A case in which all touch points on the touchscreen edge area are recognized as valid touch points, which interferes with a result of recognizing the touch gesture, and consequently, a recognized touch gesture is different from an actual touch gesture is avoided, thereby improving accuracy of recognizing the touch gesture and operation efficiency on the touchscreen.

### Embodiment 4

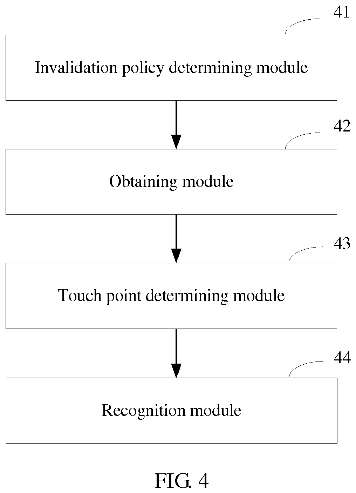

Referring to FIG. 4, FIG. 4 is a structural block diagram of a touch point recognition apparatus according to an embodiment of the present invention, where the apparatus can run on various terminals with a touchscreen. The touchscreen includes but is not limited to a capacitive touchscreen and an inductive touchscreen. For ease of description, only a part relevant to this embodiment is shown.

The touch point recognition apparatus includes:
an invalidation policy determining module 41, configured to determine a touch point invalidation policy;
an obtaining module 42, configured to obtain a touch event on a touchscreen;
a touch point determining module 43, configured to determine a touch point of a touch gesture within a touchscreen edge area according to the touch event; and
a recognition module 44, configured to recognize an invalid touch point of the touch gesture within the touchscreen edge area according to the touch point of the touch gesture within the touchscreen edge area and the touch point invalidation policy.

In a first implementation manner of this embodiment of the present invention, in the touch point recognition apparatus, the touch point invalidation policy includes:
a first policy: when a touch point of a touch gesture within the touchscreen edge area is the first touch point, and duration of the touch gesture is greater than or equal to a preset time threshold, the touch point of the touch gesture within the touchscreen edge area is recognized as an invalid touch point;
a second policy: when a touch point of a touch gesture within the touchscreen edge area moves, and a movement distance of the touch point on the touchscreen edge area is less than a preset distance threshold within a preset time threshold, the touch point of the touch gesture within the touchscreen edge area is recognized as an invalid touch point;
a third policy: when a touch point of a touch gesture within the touchscreen edge area moves, and a movement speed of the touch point on the touchscreen edge area is less than a preset speed threshold within a preset time threshold, the touch point of the touch gesture within the touchscreen edge area is recognized as an invalid touch point; or
a fourth policy: when a touch point of a touch gesture within the touchscreen edge area does not move, and duration in which the touch point does not move is greater than or equal to a preset time threshold, the touch point of the touch gesture within the touchscreen edge area is recognized as an invalid touch point.

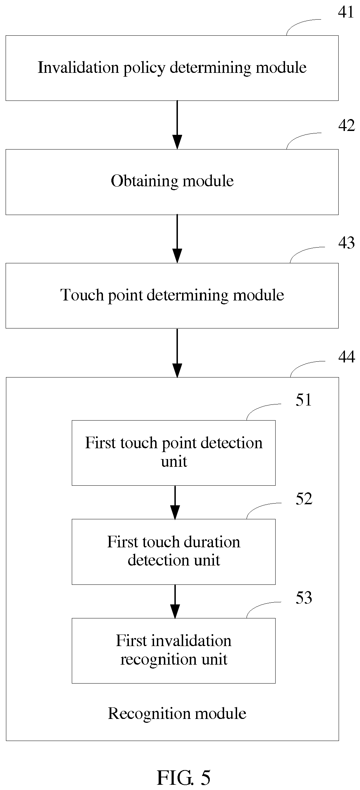

In this embodiment, a touchscreen terminal can recognize an invalid touch point of a touch gesture within a touchscreen edge area. Therefore, the touchscreen terminal does not recognize all touch points on the touchscreen edge area as valid touch points, and a result of recognizing the touch gesture is not interfered, thereby improving accuracy of recognizing the touch gesture and operation efficiency on a touchscreen. In an implementation manner of this embodiment of the present invention, referring to FIG. 5, FIG. 5 is a structural block diagram of the recognition module according to this embodiment of the present invention, where in the touch point recognition apparatus, the recognition module includes:
a first touch point detection unit 51, configured to detect whether the touch point of the touch gesture within the touchscreen edge area is the first touch point;
a first touch duration detection unit 52, configured to: when the first touch point detection unit determines that the touch point of the touch gesture within the touchscreen edge area is the first touch point, detect whether duration of the touch gesture is greater than or equal to the preset time threshold;
a first invalidation recognition unit 53, configured to: when the first touch duration detection unit determines that the duration of the touch gesture is greater than or equal to the preset time threshold, recognize the touch point of the touch gesture within the touchscreen edge area as an invalid touch point.

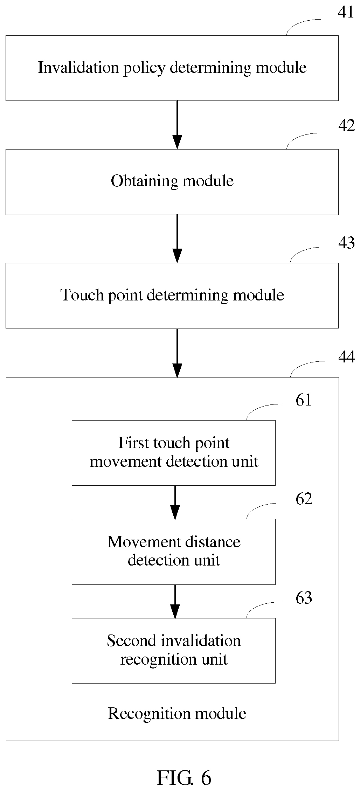

In an implementation manner of this embodiment of the present invention, referring to FIG. 6, FIG. 6 is a structural block diagram of the recognition module according to this embodiment of the present invention, where in the touch point recognition apparatus, the recognition module includes:
a first touch point movement detection unit 61, configured to detect whether the touch point of the touch gesture within the touchscreen edge area moves;
a movement distance detection unit 62, configured to: when the first touch point movement detection unit detects that the touch point of the touch gesture within the touchscreen edge area moves, detect whether a movement distance of the touch point on the touchscreen edge area is less than the preset distance threshold within the preset time threshold; and
a second invalidation recognition unit 63, configured to: when the movement distance detection unit detects that the movement distance of the touch point on the touchscreen edge area is less than the preset distance threshold within the preset time threshold, recognize the touch point of the touch gesture within the touchscreen edge area as an invalid touch point.

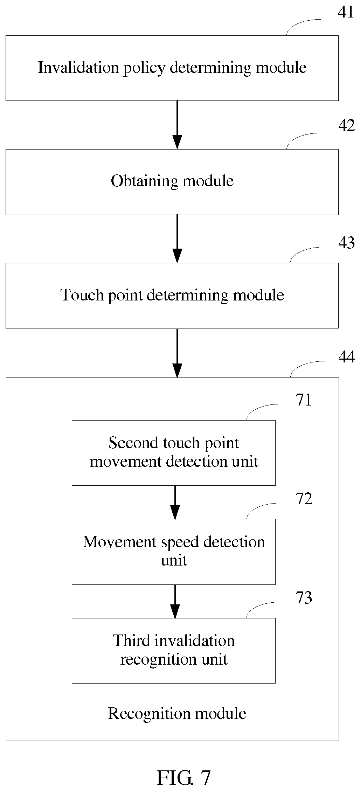

In an implementation manner of this embodiment of the present invention, referring to FIG. 7, FIG. 7 is a structural block diagram of the recognition module according to this embodiment of the present invention, where in the touch point recognition apparatus, the recognition module includes:
a second touch point movement detection unit 71, configured to detect whether the touch point of the touch gesture within the touchscreen edge area moves;
a movement speed detection unit 72, configured to: when the second touch point movement detection unit detects that the touch point of the touch gesture within the touchscreen edge area moves, detect whether a movement speed of the touch point on the touchscreen edge area is less than the preset speed threshold within the preset time threshold; and
a third invalidation recognition unit 73, configured to: when the movement speed detection unit detects that the movement speed of the touch point on the touchscreen edge area is less than the preset speed threshold within the preset time threshold, recognize the touch point of the touch gesture within the touchscreen edge area as an invalid touch point.

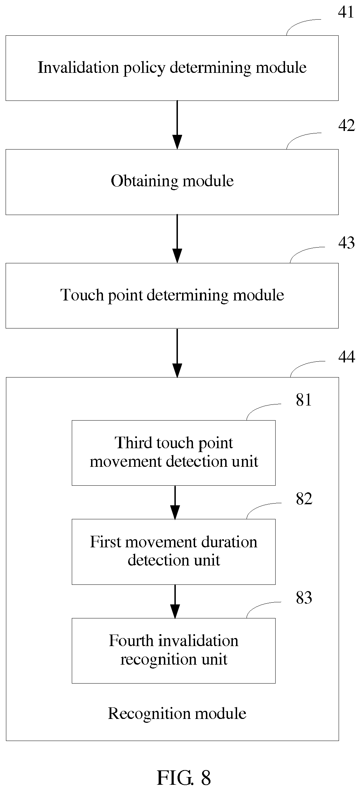

In an implementation manner of this embodiment of the present invention, referring to FIG. 8, FIG. 8 is a structural block diagram of the recognition module according to this embodiment of the present invention, where in the touch point recognition apparatus, the recognition module includes:
a third touch point movement detection unit 81, configured to detect whether the touch point of the touch gesture within the touchscreen edge area moves;
a first movement duration detection unit 82, configured to: when the third touch point movement detection unit detects that the touch point of the touch gesture within the touchscreen edge area does not move, detect whether duration in which the touch point does not move is greater than or equal to the preset time threshold; and
a fourth invalidation recognition unit 83, configured to: when the first movement duration detection unit detects that the duration in which the touch point does not move is greater than or equal to the preset time threshold, recognize the touch point of the touch gesture within the touchscreen edge area as an invalid touch point.

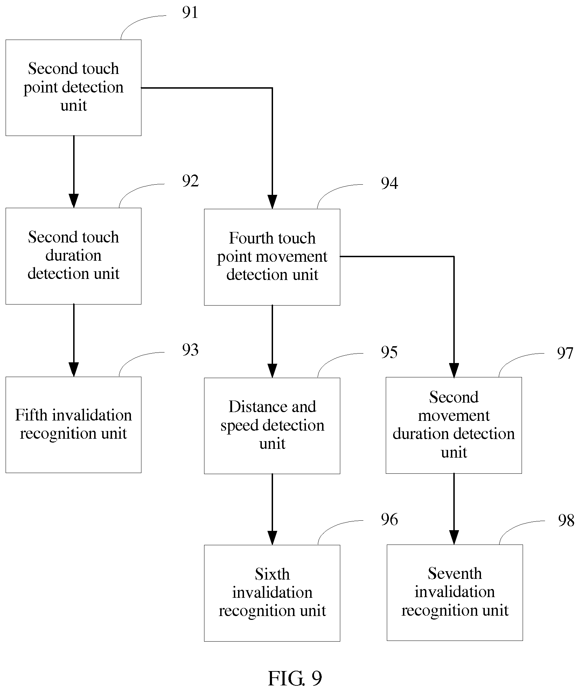

In an implementation manner of this embodiment of the present invention, referring to FIG. 9, FIG. 9 is a structural block diagram of the recognition module according to this embodiment of the present invention, where in the touch point recognition apparatus, the recognition module includes:
a second touch point detection unit 91, configured to detect whether the touch point of the touch gesture within the touchscreen edge area is the first touch point;
a second touch duration detection unit 92, configured to: when the second touch point detection unit detects that the touch point of the touch gesture within the touchscreen edge area is the first touch point, detect whether duration of the touch gesture is greater than or equal to the preset time threshold;
a fifth invalidation recognition unit 93, configured to: when the second touch duration detection unit detects that the duration of the touch gesture is greater than or equal to the preset time threshold, recognize the touch point of the touch gesture within the touchscreen edge area as an invalid touch point;
a fourth touch point movement detection unit 94, configured to: when the second touch point detection unit detects that the touch point of the touch gesture within the touchscreen edge area is not the first touch point, detect whether the touch point of the touch gesture within the touchscreen edge area moves;
a distance and speed detection unit 95, configured to: when the fourth touch point movement detection unit detects that the touch point of the touch gesture within the touchscreen edge area moves, detect whether a movement distance on the touchscreen edge area is less than the preset distance threshold within the preset time threshold, or detect whether a movement speed on the touchscreen edge area is less than the preset speed threshold within the preset time threshold;
a sixth invalidation recognition unit 96, configured to: when the distance and speed detection unit detects that the movement distance on the touchscreen edge area is less than the preset distance threshold within the preset time threshold, or detects that the movement speed on the touchscreen edge area is less than the preset speed threshold within the preset time threshold, recognize the touch point of the touch gesture within the touchscreen edge area as an invalid touch point;
a second movement duration detection unit 97, configured to: when the fourth touch point movement detection unit detects that the touch point of the touch gesture within the touchscreen edge area does not move, detect whether duration in which the touch point does not move is greater than or equal to the preset time threshold; and
a seventh invalidation recognition unit 98, configured to: when the second movement duration detection unit detects that the duration in which the touch point does not move is greater than or equal to the preset time threshold, recognize the touch point of the touch gesture within the touchscreen edge area as an invalid touch point.

Another embodiment of the present invention further provides a touchscreen terminal that includes the foregoing touch point recognition apparatus. The terminal includes but is not limited to a mobile terminal.

Another embodiment of the present invention further provides an apparatus embodiment that implements the steps and the methods in the foregoing method embodiments. Another embodiment of the present invention may be applied to a touchscreen terminal, where the terminal includes but is not limited to a mobile terminal.

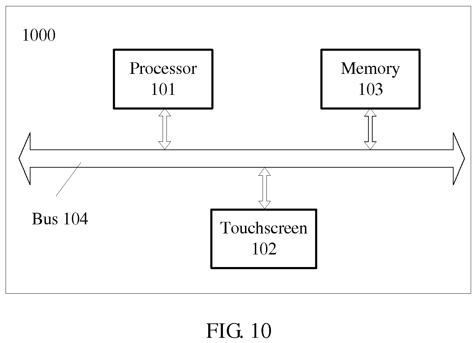

Referring to FIG. 10, FIG. 10 is a schematic structural diagram of a touchscreen terminal according to an embodiment of the present invention, and in this embodiment, a touchscreen terminal 1000 includes:
a processor (processor) 101, a touchscreen 102, a memory (memory) 103, and a bus 104.

The methods disclosed in the foregoing embodiments of the present invention may be applied to the processor 101, or in other words, implemented by the processor 101. The processor 101 controls an operation of the touchscreen terminal 1000, and the processor 101 may be an integrated circuit chip and has a signal processing capability. In an implementation process, the foregoing processor 101 configured to execute the methods disclosed in the embodiments of the present invention may be a central processing unit (Central Processing Unit, CPU), a digital signal processor (DSP), an application-specific integrated circuit (ASIC), a field programmable gate array (FPGA) or another programmable logic device, a discrete gate or a transistor logic device, or a discrete hardware assembly, which may implement or execute the methods, the steps, and the logical block diagrams disclosed in the embodiments of the present invention.

The steps of the method disclosed with reference to the embodiments of the present invention may be directly performed by the hardware processor 101, or may be performed by using a combination of hardware and software in the processor 101. The software may be located in a mature storage medium in the field, such as a random access memory, a flash memory, a read-only memory, a programmable read-only memory, an electrically-erasable programmable memory, or a register. The storage medium is located in the memory 103. The processor 101 reads information in the memory 103, and implements the steps of the foregoing methods in combination with the hardware in the processor 101.

The touchscreen 102 refers to a screen with an input function and an output display function. The touchscreen includes but is not limited to a capacitive touchscreen and an inductive touchscreen.

The memory 103 may include a read-only memory and a random access memory, and provides an instruction and data for the processor 101. A part of the memory 103 may further include a nonvolatile random access memory (NVRAM). The memory 103 stores software executed by the processor 101.

All components of the touchscreen terminal 1000 are coupled together by using the bus 104, where in addition to a data bus, the bus 104 includes a power bus, a control bus, and a status signal bus. However, for clarity of description, various buses are marked as the bus 104 in the figure.

A person of ordinary skill in the art may understand that all or a part of the steps of the methods in the foregoing embodiments may be implemented in a manner of an instruction in a program and relevant hardware, where the program may be stored in a readable storage medium, and the storage medium, such as a random access memory, a flash memory, a read-only memory, a programmable read-only memory, an electrically-erasable programmable memory, or a register, is located in the memory.

The processor of the touchscreen terminal reads information in the memory, and implements the methods in the embodiments of the present invention in combination with the hardware in the processor.

The foregoing descriptions are merely exemplary embodiments of the present invention, but are not intended to limit the present invention. Any modification, equivalent replacement, or improvement made without departing from the spirit and principle of the present invention should fall within the protection scope of the present invention.

## Claims

1. A touch point recognition method, comprising:
determining, by a touchscreen terminal, a touch point invalidation policy;
obtaining a touch event on a touchscreen;
determining a touch point of a touch gesture within a touchscreen edge area according to the touch event; and
recognizing an invalid touch point of the touch gesture within the touchscreen edge area according to the touch point of the touch gesture within the touchscreen edge area and the touch point invalidation policy.

2. The touch point recognition method according to claim 1, wherein the touch point invalidation policy comprises at least one of the following policies:
a first policy: when a touch point of a touch gesture within the touchscreen edge area is the first touch point, and duration of the touch gesture is greater than or equal to a preset time threshold, the touch point of the touch gesture within the touchscreen edge area is recognized as an invalid touch point;
a second policy: when a touch point of a touch gesture within the touchscreen edge area moves, and a movement distance of the touch point on the touchscreen edge area is less than a preset distance threshold within a preset time threshold, the touch point of the touch gesture within the touchscreen edge area is recognized as an invalid touch point;
a third policy: when a touch point of a touch gesture within the touchscreen edge area moves, and a movement speed of the touch point on the touchscreen edge area is less than a preset speed threshold within a preset time threshold, the touch point of the touch gesture within the touchscreen edge area is recognized as an invalid touch point; or
a fourth policy: when a touch point of a touch gesture within the touchscreen edge area does not move, and duration in which the touch point does not move is greater than or equal to a preset time threshold, the touch point of the touch gesture within the touchscreen edge area is recognized as an invalid touch point.

3. The touch point recognition method according to claim 1 or 2, wherein when the touchscreen terminal determines that the touch point invalidation policy is the first policy among the policies for determining a touch point as invalid by the touchscreen terminal, the recognizing an invalid touch point within the touchscreen edge area according to the touch point of the touch gesture within the touchscreen edge area and the touch point invalidation policy is specifically:
detecting whether the touch point of the touch gesture within the touchscreen edge area is the first touch point;
when it is detected that the touch point of the touch gesture within the touchscreen edge area is the first touch point, detecting whether duration of the touch gesture is greater than or equal to the preset time threshold; and
when the duration of the touch gesture is greater than or equal to the preset time threshold, recognizing the touch point of the touch gesture within the touchscreen edge area as an invalid touch point.

4. The touch point recognition method according to claim 1 or 2, wherein when the touchscreen terminal determines that the touch point invalidation policy is the second policy among the policies for determining a touch point as invalid by the touchscreen terminal, the recognizing an invalid touch point within the touchscreen edge area according to the touch point of the touch gesture within the touchscreen edge area and the touch point invalidation policy is specifically:
detecting whether the touch point of the touch gesture within the touchscreen edge area moves;
when it is detected that the touch point of the touch gesture within the touchscreen edge area moves, detecting whether a movement distance of the touch point on the touchscreen edge area is less than the preset distance threshold within the preset time threshold; and
when it is detected that the movement distance of the touch point on the touchscreen edge area is less than the preset distance threshold within the preset time threshold, recognizing the touch point of the touch gesture within the touchscreen edge area as an invalid touch point.

5. The touch point recognition method according to claim 1 or 2, wherein when the touchscreen terminal determines that the touch point invalidation policy is the third policy among the policies for determining a touch point as invalid by the touchscreen terminal, the recognizing an invalid touch point within the touchscreen edge area according to the touch point of the touch gesture within the touchscreen edge area and the touch point invalidation policy is specifically:
detecting whether the touch point of the touch gesture within the touchscreen edge area moves;
if it is detected that the touch point of the touch gesture within the touchscreen edge area moves, detecting whether a movement speed of the touch point on the touchscreen edge area is less than the preset speed threshold within the preset time threshold; and
if it is detected that the movement speed of the touch point on the touchscreen edge area is less than the preset speed threshold within the preset time threshold, recognizing the touch point of the touch gesture within the touchscreen edge area as an invalid touch point.

6. The touch point recognition method according to claim 1 or 2, wherein when the touchscreen terminal determines that the touch point invalidation policy is the fourth policy among the policies for determining a touch point as invalid by the touchscreen terminal, the recognizing an invalid touch point within the touchscreen edge area according to the touch point of the touch gesture within the touchscreen edge area and the touch point invalidation policy is specifically:
detecting whether the touch point of the touch gesture within the touchscreen edge area moves;
when it is detected that the touch point of the touch gesture within the touchscreen edge area does not move, detecting whether duration in which the touch point does not move is greater than or equal to the preset time threshold; and
when it is detected that the duration in which the touch point does not move is greater than or equal to the preset time threshold, recognizing the touch point of the touch gesture within the touchscreen edge area as an invalid touch point.

7. The touch point recognition method according to claim 1 or 2, wherein when the touchscreen terminal determines that the touch point invalidation policy is a combination of multiple policies among the policies for determining a touch point as invalid by the touchscreen terminal, the recognizing an invalid touch point within the touchscreen edge area according to the touch point of the touch gesture within the touchscreen edge area and the touch point invalidation policy is specifically:
detecting whether the touch point of the touch gesture within the touchscreen edge area is the first touch point; and
when it is detected that the touch point of the touch gesture within the touchscreen edge area is the first touch point, detecting whether duration of the touch gesture is greater than or equal to the preset time threshold, and when the duration of the touch gesture is greater than or equal to the preset time threshold, recognizing the touch point of the touch gesture within the touchscreen edge area as an invalid touch point; or when it is detected that the touch point of the touch gesture within the touchscreen edge area is not the first touch point, detecting whether the touch point of the touch gesture within the touchscreen edge area moves;
when it is detected that the touch point of the touch gesture within the touchscreen edge area moves, detecting whether a movement distance on the touchscreen edge area is less than the preset distance threshold within the preset time threshold, or detecting whether a movement speed on the touchscreen edge area is less than the preset speed threshold within the preset time threshold; and
when it is detected that the movement distance on the touchscreen edge area is less than the preset distance threshold within the preset time threshold, or it is detected that the movement speed on the touchscreen edge area is less than the preset speed threshold within the preset time threshold, recognizing the touch point of the touch gesture within the touchscreen edge area as an invalid touch point; or
when it is detected that the touch point of the touch gesture within the touchscreen edge area does not move, detecting whether duration in which the touch point does not move is greater than or equal to the preset time threshold, and when it is detected that the duration in which the touch point does not move is greater than or equal to the preset time threshold, recognizing the touch point of the touch gesture within the touchscreen edge area as an invalid touch point.

8. A touch point recognition apparatus, comprising:
an invalidation policy determining module, configured to determine a touch point invalidation policy;
an obtaining module, configured to obtain a touch event on a touchscreen;
a touch point determining module, configured to determine a touch point of a touch gesture within a touchscreen edge area according to the touch event; and
a recognition module, configured to recognize an invalid touch point of the touch gesture within the touchscreen edge area according to the touch point of the touch gesture within the touchscreen edge area and the touch point invalidation policy.

9. The touch point recognition apparatus according to claim 8, wherein the touch point invalidation policy determined by the invalidation policy determining module comprises at least one of the following policies:
a first policy: when a touch point of a touch gesture within the touchscreen edge area is the first touch point, the touch point of the touch gesture within the touchscreen edge area is recognized as an invalid touch point;
a second policy: when a touch point of a touch gesture within the touchscreen edge area moves, and a movement distance of the touch point on the touchscreen edge area is less than a preset distance threshold within a preset time threshold, the touch point of the touch gesture within the touchscreen edge area is recognized as an invalid touch point;
a third policy: when a touch point of a touch gesture within the touchscreen edge area moves, and a movement speed of the touch point on the touchscreen edge area is less than a preset speed threshold within a preset time threshold, the touch point of the touch gesture within the touchscreen edge area is recognized as an invalid touch point; or
a fourth policy: when a touch point of a touch gesture within the touchscreen edge area does not move, and duration in which the touch point does not move is greater than or equal to a preset time threshold, the touch point of the touch gesture within the touchscreen edge area is recognized as an invalid touch point.

10. The touch point recognition apparatus according to claim 8 or 9, wherein the recognition module comprises:
a first touch point detection unit, configured to detect whether the touch point of the touch gesture within the touchscreen edge area is the first touch point;
a first touch duration detection unit, configured to: when the first touch point detection unit determines that the touch point of the touch gesture within the touchscreen edge area is the first touch point, detect whether duration of the touch gesture is greater than or equal to the preset time threshold; and
a first invalidation recognition unit, configured to: when the first touch duration detection unit determines that the duration of the touch gesture is greater than or equal to the preset time threshold, recognize the touch point of the touch gesture within the touchscreen edge area as an invalid touch point.

11. The touch point recognition apparatus according to claim 8 or 9, wherein the recognition module comprises:
a first touch point movement detection unit, configured to detect whether the touch point of the touch gesture within the touchscreen edge area moves;
a movement distance detection unit, configured to: when the first touch point movement detection unit detects that the touch point of the touch gesture within the touchscreen edge area moves, detect whether a movement distance of the touch point on the touchscreen edge area is less than the preset distance threshold within the preset time threshold; and
a second invalidation recognition unit, configured to: when the movement distance detection unit detects that the movement distance of the touch point on the touchscreen edge area is less than the preset distance threshold within the preset time threshold, recognize the touch point of the touch gesture within the touchscreen edge area as an invalid touch point.

12. The touch point recognition apparatus according to claim 8 or 9, wherein the recognition module comprises:
a second touch point movement detection unit, configured to detect whether the touch point of the touch gesture within the touchscreen edge area moves;
a movement speed detection unit, configured to: when the second touch point movement detection unit detects that the touch point of the touch gesture within the touchscreen edge area moves, detect whether a movement speed of the touch point on the touchscreen edge area is less than the preset speed threshold within the preset time threshold; and
a third invalidation recognition unit, configured to: when the movement speed detection unit detects that the movement speed of the touch point on the touchscreen edge area is less than the preset speed threshold within the preset time threshold, recognize the touch point of the touch gesture within the touchscreen edge area as an invalid touch point.

13. The touch point recognition apparatus according to claim 8 or 9, wherein the recognition module comprises:
a third touch point movement detection unit, configured to detect whether the touch point of the touch gesture within the touchscreen edge area moves;
a first movement duration detection unit, configured to: when the third touch point movement detection unit detects that the touch point of the touch gesture within the touchscreen edge area does not move, detect whether duration in which the touch point does not move is greater than or equal to the preset time threshold; and
a fourth invalidation recognition unit, configured to: when the first movement duration detection unit detects that the duration in which the touch point does not move is greater than or equal to the preset time threshold, recognize the touch point of the touch gesture within the touchscreen edge area as an invalid touch point.

14. The touch point recognition apparatus according to claim 8 or 9, wherein the recognition module comprises:
a second touch point detection unit, configured to detect whether the touch point of the touch gesture within the touchscreen edge area is the first touch point;
a second touch duration detection unit, configured to: when the second touch point detection unit detects that the touch point of the touch gesture within the touchscreen edge area is the first touch point, detect whether duration of the touch gesture is greater than or equal to the preset time threshold;
a fifth invalidation recognition unit, configured to: when the second touch duration detection unit detects that the duration of the touch gesture is greater than or equal to the preset time threshold, recognize the touch point of the touch gesture within the touchscreen edge area as an invalid touch point;
a fourth touch point movement detection unit, configured to: when the second touch point detection unit detects that the touch point of the touch gesture within the touchscreen edge area is not the first touch point, detect whether the touch point of the touch gesture within the touchscreen edge area moves;
a distance and speed detection unit, configured to: when the fourth touch point movement detection unit detects that the touch point of the touch gesture within the touchscreen edge area moves, detect whether a movement distance on the touchscreen edge area is less than the preset distance threshold within the preset time threshold, or detect whether a movement speed on the touchscreen edge area is less than the preset speed threshold within the preset time threshold;
a sixth invalidation recognition unit, configured to: when the distance and speed detection unit detects that the movement distance on the touchscreen edge area is less than the preset distance threshold within the preset time threshold, or detects that the movement speed on the touchscreen edge area is less than the preset speed threshold within the preset time threshold, recognize the touch point of the touch gesture within the touchscreen edge area as an invalid touch point;
a second movement duration detection unit, configured to: when the fourth touch point movement detection unit detects that the touch point of the touch gesture within the touchscreen edge area does not move, detect whether duration in which the touch point does not move is greater than or equal to the preset time threshold; and
a seventh invalidation recognition unit, configured to: when the second movement duration detection unit detects that the duration in which the touch point does not move is greater than or equal to the preset time threshold, recognize the touch point of the touch gesture within the touchscreen edge area as an invalid touch point.
